# EUROPÄISCHE PATENTSCHRIFT

(11) **EP 0 728 882 B1**
(45) Veröffentlichungstag und Bekanntmachung des Hinweises auf die Patenterteilung: **14.03.2001**
(21) Anmeldenummer: 95810791.4
(22) Anmeldetag: 13.12.1995
(51) Int. Cl.: E04F 13/08, F16B 19/14

(54) **Befestigungselement zum Befestigen von Platten grosser Dicke an Bauteilen**
Fastening element for fastening thick plates on structural components
Elément de fixation pour plaques d'épaisseur élévée sur des éléments de construction

(30) Priorität: 21.02.1995 DE 19505841
(43) Veröffentlichungstag der Anmeldung: 28.08.1996
(73) Patentinhaber: HILTI Aktiengesellschaft, 9494 Schaan (LI)
(72) Erfinder: Remo, Kluser, CH-9450 Altstätten (CH)
(74) Vertreter: Wildi, Roland

(56) Entgegenhaltungen:
- EP-A- 0 282 445
- EP-A- 0 420 799
- EP-A- 0 628 384
- FR-A- 2 610 375
- GB-A- 1 166 301

## Beschreibung

Die Erfindung betrifft ein Befestigungselement zum Befestigen von Platten, insbesondere Dämmstoffplatten, grosser Dicke an Bauteilen mit einem länglichen zylindrischen Schaft, der an seinem einen Ende in einer Spitze ausläuft und an seinem anderen Ende einen flanschartig verbreiterten Kopf aufweist, mit einem relativ zum Schaft verschiebbaren Anpresselement für die Platte und mit einer Knautschzone zum Abbauen von überschüssiger Setzenergie.

Zur Befestigung von Platten, insbesondere von Dämmstoffplatten, die zumeist aus Material mit geringer Druckfestigkeit bestehen, ist in der EP-A-0420799 ein Befestigungselement beschrieben, welches einen grossflächigen Kopf und einen von diesem abragenden Hohlschaft mit Knautschzone sowie einem Widerlager für einen im Hohlschaft geführten Nagel aufweist. Das Befestigungselement ist auf die Länge der zu befestigenden Dämmstoffplatte abgestimmt. Der aus Kunststoff gefertigte Hohlschaft weist über seine gesamte Länge einen relativ grossen Durchmesser auf und ist daher nicht in alle Plattenmaterialien leicht einsteckbar. Insbesondere bei grossen Plattendicken kann es schwierig sein, das Befestigungselement weit genug einzustecken, so dass es mit seinem vorderen Ende am Bauteil ansteht. In derartigen Fällen kann es sogar erforderlich sein, die Platte zunächst mit einer Bohrung zu versehen, deren Durchmesser auf die Dicke des Hohlschaftes abgestimmt sein muss. Das Befestigungselement wird sodann in diese Bohrung eingesteckt und dann mit Hilfe des Nagels im Bauteil befestigt. Dieser Vorgang ist sehr zeitaufwendig und erfordert zusätzliche Ausrüstungmittel für die Erstellung der Bohrung.

Zur Befestigung von Platten grosser Dicke, beispielsweise 100 mm bis 300 mm und mehr, an Bauteilen sind die Befestigungselemente üblicherweise mit Nägeln grosser Länge ausgerüstet. Die Schäfte dieser Nägel sind relativ dünn ausgebildet und weisen beispielsweise einen Durchmesser von nur etwa 4,5 mm auf. Bei den zuvor beschriebenen bekannten Befestigungselementen sind die Nägel durch eine Zentralbohrung des Hohlschaftes geführt. Beim Eintreiben der Nägel in den Untergrund kann es insbesondere bei festerem Untergrund zu einem Knicken des Schaftes des Nagels kommen. Dies kann dazu führen, dass die Platte nicht ausreichend an dem Bauteil befestigt ist. Um dies zu beheben, müssen oft zusätzliche Befestigungspunkte gesetzt werden. Durch das Knicken des Nagels kann das Befestigungselement in eine unerwünschte Lage verkippen. Es muss dann entfernt werden, was aufgrund des geknickten Nagels oft nicht einfach zu bewerkstelligen ist und zu einer Beschädigung der Platte führen kann.

Es besteht daher der Wunsch nach einem Befestigungselement zum Befestigen von Platten, insbesondere Dämmstoffplatten grosser Dicke an Bauteilen, welches leicht in die Plattenmaterialien einsteck- und durchsteckbar ist, ohne dass zuvor Bohrungen in den Platten erstellt werden müssen, und bei dem gewährleistet ist, dass der Schaft des Nagels beim Eintreiben in das Bauteil nicht knicken kann.

Die Lösung dieser scheinbar widersprüchlichen Aufgaben erfolgt durch ein Befestigungselement, welches die im Kennzeichen des Patentanspruchs 1 angeführten Merkmale aufweist. Das erfindungsgemässe Befestigungselement zum Befestigen von Platten grosser Dicke an Bauteilen umfasst einen länglichen zylindrischen Schaft, der an seinem einen Ende in einer Spitze ausläuft und an seinem anderen Ende einen flanschartig verbreiterten Kopf aufweist, ein relativ zum Schaft verschiebbares Anpresselement für die Platte und eine Knautschzone zum Abbauen von überschüssiger Setzenergie. Der Schaft ist in einer zylindrischen Hülse geführt, die sich über etwa drei Viertel bis etwa neun Zehntel der Länge des Schaftes erstreckt und einen Aussendurchmesser aufweist, der etwa das 1,4-fache bis etwa das 3-fache des Schaftdurchmessers beträgt. Die Hülse stützt das Anpresselement im kopfseitigen rückwärtigen Bereich des Schaftes axial ab und besitzt ein spitzenseitiges Ende, das als ringförmige Schneide ausgebildet ist.

Das erfindungsgemässe Befestigungselement weist eine sehr schlanke Erscheinungsform auf. Auf einen schlanken Einsteckbereich folgt ein pilzförmig erweitertes Anpresselement. Um zu verhindern, dass der bei dicken Platten erforderliche sehr lange Schaft des Nagels beim Eintreiben in das Bauteil knickt, ist der Schaft in einer Hülse geführt, die sich über etwa drei Viertel bis etwa neun Zehntel der Länge des Schaftes erstreckt und einen Aussendurchmesser aufweist, der etwa das 1,4-fache bis etwa das 3-fache des Schaftdurchmessers beträgt. Die Hülse verbreitert den Durchmesser des Einsteckbereichs nur geringfügig, so dass das Befestigungselement auch mit Hülse leicht in dicke Plattenmaterialien einsteckbar und durchsteckbar ist, ohne dass zuvor Bohrungen erstellt werden müssten. Im eingesteckten Zustand ist die den Schaft umgebende Hülse direkt in die zu befestigende Platte eingebettet. Das erfindungsgemässe Befestigungselement weist keinen zusätzlichen Hohlschaft auf, der sich vom Anpresselement zum vorderen Schaftende des Befestigungselements erstreckt und bei den bekannten Befestigungselementen für den relativ grossen Aussendurchmesser verantwortlich ist. Der Durchmesser des Einsteckbereiches des erfindungsgemässen Befestigungselements hingegen setzt sich im wesentlichen nur aus der Summe des Schaftdurchmessers des Nagels und zweimal der Wandstärke der den Schaft umgebenden Hülse zusammen. Somit ergibt sich insgesamt ein Befestigungselement, das einen sehr schlanken Einsteckbereich aufweist. Das Anpresselement ist im wesentlichen nur im rückwärtigen Bereich des Schaftes des Nagels angeordnet und wird im kopfseitigen rückwärtigen Bereich des Schaftes von der Hülse axial abgestützt. Auf diese Weise ist der Abstand des Anpresselements von der Spitze des Schaftes festgelegt und das Anpresselement kann beim Setzen des Befestigungselements nicht übermässig in die Oberfläche der Platte eingepresst werden.

Der Innendurchmesser der Hülse ist vorzugsweise gerade so gross, dass die Hülse durch Reibungskraft am Schaft haftet, wobei die Reibungskraft derart bemessen ist, dass die Hülse noch von Hand relativ zum Schaft verschiebbar ist. Auf diese Weise ist sichergestellt, dass die Hülse nicht von selbst vom Schaft abfallen kann. Andererseits kann die Hülse aber noch von Hand verschoben werden bzw. bei Bedarf vom Schaft abgezogen werden. Mit den üblicherweise verwendeten Materialien für den Schaft und für die Hülse ergeben sich besonders vorteilhafte Werte für die Haftreibung, wenn der Innendurchmesser der Hülse etwa das 1,05-fache bis etwa das 1,15-fache des Schaftdurchmessers beträgt.

Die Wandstärke der Hülse beträgt bevorzugt etwa 1,0 mm bis etwa 4,0 mm. Bei diesen Wandstärken verleiht die Hülse den schlanken langen Schäften, die für die Befestigung von Platten grosser Dicke erforderlich sind, eine ausreichende zusätzliche Biegesteifigkeit, um ein Umknicken der Schäfte beim Eintreiben in das Bauteil zu verhindern. Zugleich wird bei diesen Wandstärken der Gesamtdurchmesser des Einsteckbereichs der Befestigungselemente nur geringfügig vergrössert, so dass das Befestigungselement leicht auch in sehr dicke Platten einsteckbar ist.

In einer bevorzugten Ausführungsvariante des Befestigungselements ist die Hülse an ihrem kopfseitigen Endbereich von dem Anpresselement umgriffen und formschlüssig gehalten. Das Anpresselement und die Hülse sind auf diese Weise fest miteinander verbunden und bilden eine bauliche Einheit. Der Nagel ist im wesentlichen um seinen Überstand gegenüber der Hülse relativ zu dieser und zum Anpresselement verschiebbar, um das Befestigungselement im Bauteil zu befestigen. Der Abstand des Anpresselements vom spitzenseitigen Vorderende der Hülse, die ja im gesetzten Zustand am Bauteil aufsteht, ist eindeutig festgelegt. Auf diese Weise kann durch geeignete Wahl der Länge der Hülse ein Befestigungselement optimaler Länge für die unterschiedlichen Plattendicken eingesetzt werden.

Es ist vorteilhaft, wenn die Hülse einen sich in Richtung des Kopfes erstreckenden zylindrischen Kragen aufweist, der die Hülse um etwa ein Siebtel bis etwa ein Fünftel ihrer Länge überragt und eine geringere Wandstärke besitzt als die Hülse. Dieser über das rückwärtige Ende der Hülse hinausragende Kragen bildet zugleich die Knautschzone und ein Widerlager für den Kopf des Nagels beim Eintreibvorgang. Durch die einstückige Anformung der Knautschzone an die Hülse sind keine zusätzlichen Kunststoffdämpfer und Unterlagscheiben als Widerlager erforderlich. Die Wandstärke des zylindrischen Kragens beträgt dabei bevorzugt etwa die Hälfte der Wandstärke der Hülse.

Eine bevorzugte Ausführungsvariante des erfindungsgemässen Befestigungselements mit fomschlüssig mit der Hülse verbundenem Anpresselement weist einen Ringspalt auf, der zwischen dem zylindrischen Kragen und einer sich axial erstreckenden Wandung des Anpresselements ein Ringspalt ausgespart ist und zur Aufnahme eines Mündungsbereichs eines vorzugsweise pulverkraftbetriebenen Setzgeräts ausgebildet ist. Dies ermöglicht ein besonders einfaches Einsetzen des Befestigungselements in den Mündungsbereich des pulverkraftbetriebenen Setzgeräts.

Die Hülse und gegebenenfalls der zylindrische Kragen bestehen aus einem hochfesten bzw. faserverstärkten Kunststoff oder aus Metall, insbesondere aus Stahl. Das Anpresselement ist in einer bevorzugten Ausführungsform des erfindungsgmässen Befestigungselements aus Kunststoff. Die Stahlhülse kann bei zufriedenstellender Biegesteifigkeit eine besonders kleine Wandstärke aufweisen. Durch die Ausbildung des Anpresselements aus Kunststoff kann die im rückwärtigen Endbereich beispielsweise mit einer Hinterschneidung oder mit umlaufenden Nuten versehene Hülse mit einem axialen Fortsatz des Anpresselements umspritzt werden, um auf diese Weise einen besonders einfachen Formschluss zwischen Hülse und Anpresselement zu erzielen.

Im folgenden wird die Erfindung mit allen ihr als wesentlich zugehörigen Einzelheiten anhand von in den Figuren dargestellten beispielsweisen Ausführungsformen näher erläutert. Es zeigen in schematischer Darstellung:
- Fig. 1: ein erstes Ausführungsbeispiel des Befestigungselements im Längsschnitt und
- Fig. 2: ein zweites Ausführungsbeispiel des Befestigungselements im Längsschnitt.

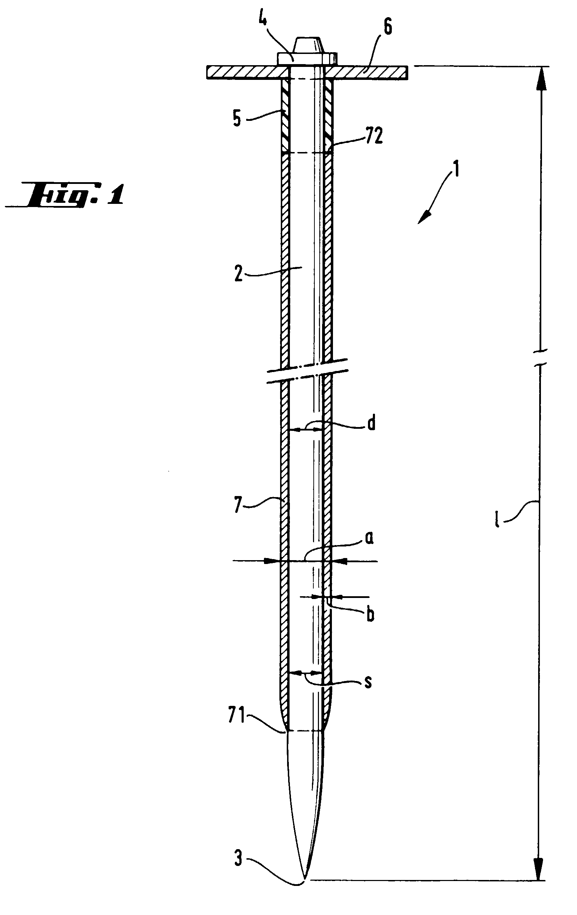

Das, erfindungsgemässe Befestigungselement ist in Fig. 1 gesamthaft mit dem Bezugszeichen 1 versehen. Es umfasst einen Nagel mit einem länglichen zylindrischen Schaft 2, der an seinem einen Ende in einer Spitze 3 ausläuft und an seinem anderen Ende einen flanschartig erweiterten Kopf 4 aufweist. Der Schaft 2 besitzt einen Durchmesser s, der zur Länge I des Schaftes 2 im Verhältnis von etwa 1:14 bis etwa 1:45 steht. Beispielsweise beträgt der Durchmesser s des Schaftes 2 etwa 4 mm bis etwa 7 mm. Gemäss der Erfindung ist der Schaft 2 in einer Hülse 7 geführt, die sich etwa über drei Viertel bis etwa neun Zehntel der Länge I des Schaftes 2 erstreckt. Der Aussendurchmesser a der Hülse 7 ist etwa 1,4-fach bis etwa 3-fach grösser als der Durchmesser s des Schaftes 2. Die Hülse 7 weist einen Innendurchmesser d auf, der nur geringfügig verschieden ist vom Durchmesser s des Schaftes 2. Vorzugsweise beträgt der Innendurchmesser der Hülse 7 etwa das 1,05-fache bis etwa das 1,15-fache des Schaftdurchmessers s. Die Wandstärke b der Hülse 7 beträgt etwa 1 mm bis etwa 4 mm.

Im Bereich des Kopfes 4 des Nagels ist ein Anpresselement 6 für die zu befestigende Platte angeordnet. Insbesondere handelt es sich dabei im Ausführungsbeispiel gemäss Fig. 1 um ein scheibenartiges Element, das mit einer zentralen Durchgangsbohrung für den Schaft 2 des Nagels ausgestattet ist. Das Anpresselement 6 stützt sich unter Zwischenlage eines Dämpfelements 5 aus Kunststoff am kopfseitigen rückwärtigen Ende 72 der Hülse ab. Auf diese Weise ist der Abstand, den das Anpresselement 6 vom spitzenseitigen Ende 71 der Hülse 7 besitzt, festgelegt. Je nach der aufgebrachten Setzenergie wird das Dämpfelement 5 in der Knautschzone des Befestigungselements 1 mehr oder weniger stark gestaucht. Der Abstand des Anpresselements 6 entspricht jedoch immer wenigstens der Länge der Hülse 7.

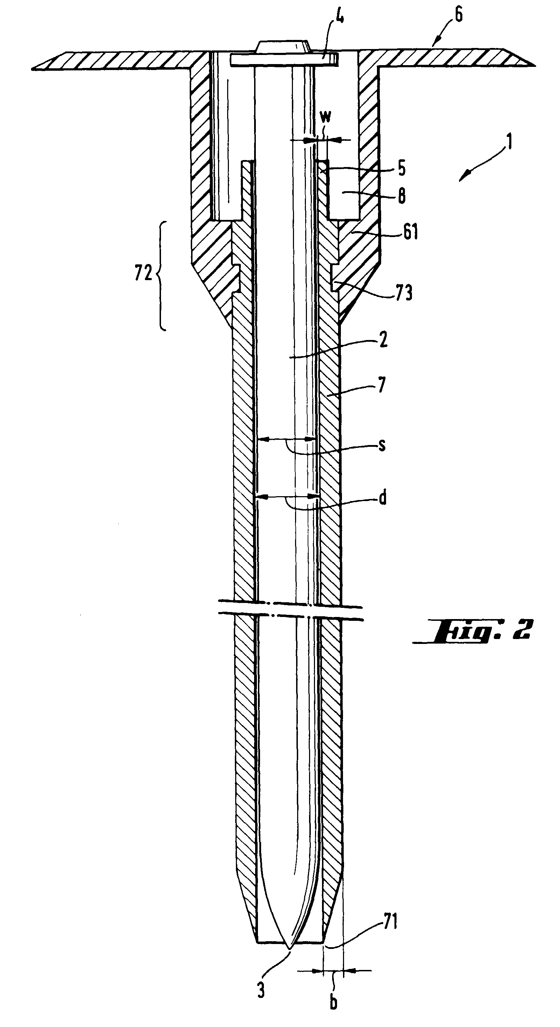

Das in Fig. 2 dargestellte zweite Ausführungsbeispiel des erfindungsgemässen Befestigungselements 1 entspricht weitgehend dem anhand Fig. 1 erläuterten ersten Ausführungsbeispiel. Der Unterschied besteht in der Ausbildung der Knautschzone 5 und des Anpresselements 6. Die Knautschzone 5 ist in diesem Fall als zylindrischer Kragen ausgebildet, der an die Hülse 7 angeformt ist. Der Kragen 5 überragt die Hülse 7 um etwa ein Siebtel bis etwa ein Fünftel ihrer Länge und besitzt eine Wandstärke w, die etwa die Hälfte der Wandstärke der Hülse 7 beträgt. Der Kragen 5 nimmt überschüssige Setzenergie auf und bildet zugleich die Knautschzone und ein Widerlager für den Kopf 4 des Nagels.

Das Anpresselement 6 weist die Form eines zum Nagelkopf 4 hin offenen Topfes auf. Ein Fortsatz 61 des Anpresselements 6 umgreift die Hülse 7 an ihrem rückwärtigen Endbereich 72 und ist formschlüssig, beispielsweise über eine Nut 73 in der Hülsenaussenwandung, mit ihr verbunden. Die formschlüssige Verbindung des Anpressteils 6 aus Kunststoff mit der vorzugsweise metallischen Hülse 7 kann beispielsweise durch Umspritzen erfolgen. Die Hülse 7 besteht aus einem hochfesten bzw. faserverstärkten Kunststoff oder aus Metall, insbesondere Stahl.

Zwischen dem zylindrischen Kragen 5 und einer sich axial erstreckenden Wandung des topfförmigen Anpresselements 6 ist ein Ringspalt 8 ausgespart. Der Ringspalt 8 dient zur Aufnahme eines Mündungsbereichs eines vorzugsweise pulverkraftbetriebenen Setzgeräts (nicht dargestellt). Dies ermöglicht ein besonders einfaches Einsetzen des Befestigungselements in den Mündungsbereich des pulverkraftbetriebenen Setzgeräts.

Das erfindunggemäss ausgebildete Befestigungselement weist eine schlanke Bauform auf und bietet daher auch bei sehr dicken Platten, beispielsweise Dämmplatten, keine Probleme beim Ein- und Durchstecken. Durch die zusätzliche Anordnung einer Hülse, die sich über einen wesentlichen Teil der Länge des Nagelschaftes erstreckt, ist auch bei sehr langen und dünnen Nägeln eine ausreichende Biegesteifigkeit gegeben, die verhindert, dass der Nagel beim Eintreiben in ein Bauteil umknickt. Die Endlage des Anpresselements ist durch das Abstützen auf dem rückwärtigen Ende der Hülse festgelegt. Der Abstand des Anpresselements vom Bauteil beträgt immer wenigstens die Länge der Hülse. Dadurch kann die Länge des Befestigungselement in optimaler Weise auf die Dicke der zu befetigenden Platte abgestimmt werden.

## Patentansprüche

1. Befestigungselement zum Befestigen von Platten grosser Dicke an Bauteilen, mit einem länglichen zylindrischen Schaft (2), der an seinem einen Ende in einer Spitze (3) ausläuft und an seinem anderen Ende einen flanschartig verbreiterten Kopf (4) aufweist, mit einem relativ zum Schaft (2) verschiebbaren Anpresselement (6) für eine Platte, welches im kopfseitigen Bereich des Schaftes (2) angeordnet ist, und mit einer Knautschzone zum Abbauen von überschüssiger Setzenergie, wobei der Schaft in einer zylindrischen Hülse (7) geführt ist, **dadurch gekennzeichnet**, dass die Hülse (7) sich über etwa drei Viertel bis etwa neun Zehntel der Länge des Schaftes (2) erstreckt und einen Aussendurchmesser (a) aufweist, der etwa das 1,4-fache bis etwa das 3-fache des Durchmessers (s) des Schaftes (2) beträgt, und dass die Hülse das Anpresselement (6) im kopfseitigen, rückwärtigen Bereich des Schaftes (2) axial abstützt und ein spitzenseitiges Ende (71) besitzt, das als ringförmige Schneide ausgebildet ist.

2. Befestigungselement nach Anspruch 1, dadurch gekennzeichnet, dass die Hülse (7) einen Innendurchmesser (d) aufweist, der derart gewählt ist, dass die Hülse (7) durch Reibungskraft am Schaft (2) haftet, wobei die Reibungskraft derart bemessen ist, dass die Hülse (7) noch von Hand relativ zum Schaft (2) verschiebbar ist.

3. Befestigungselement nach Anspruch 1 oder 2, dadurch gekennzeichnet, dass der Innendurchmesser (d) der Hülse etwa das 1,05-fache bis etwa das 1,15-fache des Durchmesser (s) des Schaftes (2) beträgt.

4. Befestigungselement nach einem der vorangehenden Ansprüche, dadurch gekennzeichnet, dass die Hülse (7) eine Wandstärke (b) von etwa 1 mm bis etwa 4 mm aufweist.

5. Befestigungselement nach einem der vorangehenden Ansprüche, dadurch gekennzeichnet, dass das Anpresselement (6) die Hülse (7) an ihrem kopfseitigen Endbereich formschlüssig umgreift.

6. Befestigungselement nach einem der vorangehenden Ansprüche, dadurch gekennzeichnet, dass die Hülse (7) einen sich in Richtung des Kopfes (4) erstreckenden zylindrischen Kragen (5) aufweist, der die Hülse (7) um etwa ein Siebtel bis etwa ein Fünftel ihrer Länge überragt und eine geringere Wandstärke (w) besitzt als die Hülse (7) und zugleich die Knautschzone und ein Widerlager für den Kopf (4) bildet.

7. Befestigungselement nach Anspruch 6, dadurch gekennzeichnet, dass die Wandstärke (w) des zylindrischen Kragens (5) etwa die Hälfte der Wandstärke (b) der Hülse (7) beträgt.

8. Befestigungselement nach Anspruch 6 oder 7, dadurch gekennzeichnet, dass zwischen dem zylindrischen Kragen (5) und einer sich axial erstreckenden Wandung des Anpresselements (6) ein Ringspalt (8) ausgespart ist, der zur Aufnahme eines Mündungsbereichs eines vorzugsweise pulverkraftbetriebenen Setzgerätes ausgebildet ist.

9. Befestigungselement nach einem der vorangehenden Ansprüche, dadurch gekennzeichnet, dass die Hülse (7) und gegebenenfalls der zylindrische Kragen (5) aus einem hochfesten bzw. faserverstärkten Kunststoff oder aus Metall, insbesondere Stahl besteht.

10. Befestigungselement nach Anspruch 9, dadurch gekennzeichnet, dass das Anpresselement (6) aus Kunststoff ist.

## Claims

1. Fixing element, for securing thick plates to structural components, having an elongated cylindrical shaft (2), which tapers off at one end into a point (3) and at its other end has a head (4) which widens out in the style of a flange, a clamping element (6), which can be displaced in relation to the shaft (2) for a plate and is located in the region of the head end of the shaft (2), and a collapsible zone for relieving excess driving energy, the shaft being guided into a cylindrical sleeve (7),
characterized in that the sleeve (7) extends over approximately three-quarters to approximately nine-tenths of the length of the shaft (2) and has an external diameter (a) which amounts to approximately 1.4 times to approximately 3 times the diameter (s) of the shaft (2),
and in that the sleeve axially supports the clamping element (6) at the rear in the region of the head end of the shaft (2) and has an end (71) at the pointed end which takes the form of an annular cutting edge.

2. Fixing element according to Claim 1,
characterized in that the sleeve (7) has an internal diameter (d) which is such that the sleeve (7) adheres to the shaft (2) by frictional force, the frictional force being adjusted so that the sleeve (7) can still be displaced by hand in relation to the shaft (2).

3. Fixing element according to Claim 1 or 2,
characterized in that the internal diameter (d) of the sleeve amounts to approximately 1.05 times to approximately 1.15 times the diameter (s) of the shaft (2).

4. Fixing element according to one of the preceding claims,
characterized in that the sleeve (7) has a wall thickness (b) of approximately 1 mm to approximately 4 mm.

5. Fixing element according to one of the preceding claims,
characterized in that the clamping element (6) surrounds the sleeve (7), at the end in the region of its head, in an interlocking manner.

6. Fixing element according to one of the preceding claims,
characterized in that the sleeve (7) has a cylindrical collar (5) extending in the direction of the head (4), this collar (5) projecting above the sleeve (7) by approximately one seventh up to approximately one fifth of its length and having a smaller wall thickness (w) than the sleeve (7) and simultaneously forming the collapsible zone and an abutment for the head (4).

7. Fixing element according to Claim 6,
characterized in that the wall thickness (w) of the cylindrical collar (5) amounts to approximately half the wall thickness (b) of the sleeve (7).

8. Fixing element according to Claim 6 or 7,
characterized in that between the cylindrical collar (5) and an axially extending wall of the clamping element (6) there is an annular gap (8), which is formed to accommodate a mouth area of a preferably powder power-operated driving tool.

9. Fixing element according to one of the preceding claims,
characterized in that the sleeve (7) and possibly the cylindrical collar (5) is made of a high-strength or fibre-reinforced plastic or of a metal, particularly steel.

10. Fixing element according to Claim 9,
characterized in that the clamping element (6) is made of plastic.

## Revendications

1. Élément de fixation pour la fixation de panneaux de grande épaisseur sur des éléments structurels, avec une tige cylindrique allongée (2) qui, à l'une de ses extrémités, se termine par une pointe (3) et, à son autre extrémité, comporte une tête (4) élargie en forme de collerette, avec un élément presseur (6) pour un panneau, lequel est apte à se déplacer par rapport à la tige (2) et est disposé dans la zone côté tête de la tige (2), et avec une zone déformable pour absorber l'énergie de scellement excédentaire, la tige (2) étant guidée dans un manchon cylindrique (7), caractérisé en ce que le manchon (7) s'étend sur environ trois quarts à environ neuf dixièmes de la longueur de la tige (2) et présente un diamètre extérieur (a) qui correspond à environ 1,4 fois à environ 3 fois le diamètre (s) de la tige (2), et en ce que le manchon supporte axialement l'élément presseur (6) dans la zone arrière côté tête de la tige (2) et possède une extrémité côté pointe (71) qui est conçue sous la forme d'un tranchant annulaire.

2. Élément de fixation selon la revendication 1, caractérisé en ce que le manchon (7) présente un diamètre intérieur (d) qui est choisi de façon que le manchon (7) adhère à la tige (2) par l'intermédiaire d'une force de frottement, la force de frottement étant calculée pour que le manchon (7) puisse encore être déplacé manuellement par rapport à la tige (2).

3. Élément de fixation selon la revendication 1 ou 2, caractérisé en ce que le diamètre intérieur (d) du manchon correspond environ à 1,05 fois à environ 1,15 fois le diamètre (s) de la tige (2).

4. Élément de fixation selon une des revendications précédentes, caractérisé en ce que le manchon (7) présente une épaisseur de paroi (b) d'environ 1 mm à environ 4 mm.

5. Élément de fixation selon une des revendications précédentes, caractérisé en ce que l'élément presseur (6) entoure le manchon (7) par l'intermédiaire d'une liaison par crabotage dans la zone d'extrémité côté tête de celui-ci.

6. Élément de fixation selon une des revendications précédentes, caractérisé en ce que le manchon (7) comporte un collet cylindrique (5) qui s'étend en direction de la tête (4) et qui dépasse du manchon (7) d'environ un septième à environ un cinquième de sa longueur et présente une épaisseur de paroi (w) inférieure à celle du manchon (7) et forme simultanément la zone déformable et un contre-appui pour la tête (4).

7. Élément de fixation selon la revendication 6, caractérisé en ce que l'épaisseur de paroi (w) du collet cylindrique (5) correspond environ à la moitié de l'épaisseur de paroi (b) du manchon (7).

8. Élément de fixation selon la revendication 6 ou 7, caractérisé en ce que, entre le collet cylindrique (5) et une paroi d'extension axiale de l'élément presseur (6), est ménagé un interstice annulaire (8) qui est conçu pour recevoir une zone débouchante d'un outil de scellement de préférence fonctionnant par explosion.

9. Élément de fixation selon une des revendications précédentes, caractérisé en ce que le manchon (7) et éventuellement le collet cylindrique (5) sont réalisés en une matière plastique à résistance élevée ou, respectivement, renforcée par des fibres, ou en métal, en particulier en acier.

10. Élément de fixation selon la revendication 9, caractérisé en ce que l'élément presseur (6) est en matière plastique.
